# FASCICULE DE BREVET EUROPEEN

(11) **EP 1 657 866 B1**
(45) Date de publication et mention de la délivrance du brevet: **24.10.2007**
(21) Numéro de dépôt: 05300859.5
(22) Date de dépôt: 26.10.2005
(51) Int. Cl.: H04L 12/56

(54) **Dispositif de sélection d'informations de routage pour un routeur d'un réseau de communication**
Gerät zum Auswählen von Routing-Informationen für einen Router in einem Kommunikationsnetz
Device for selecting routing information for a router in a communications network

(30) Priorité: 10.11.2004 FR 0452597
(43) Date de publication de la demande: 17.05.2006
(73) Titulaire: Alcatel Lucent, 75008 Paris (FR)
(72) Inventeur: Marce, Olivier, 91300, Massy (FR); Levy, Thomas, 75013, Paris (FR)
(74) Mandataire: Korakis-Ménager, Sophie

(56) Documents cités:
- US-A1- 2003 023 701
- US-A1- 2003 185 226
- US-A1- 2004 006 640

## Description

L'invention concerne les routeurs utilisés dans les réseaux de communication pour router les paquets de données (ou datagrammes) entre des sources et des destinations.

Comme le sait l'homme de l'art, pour qu'un routeur puisse transmettre sur l'une de ses interfaces des paquets (ou datagrammes) qu'il a reçus sur une autre de ses interfaces, il doit disposer d'informations de routage. Ces dernières sont généralement stockées dans deux bases de données implantées dans le routeur : une base d'informations de routage (ou RIB pour « Routing Information Base ») qui est alimentée en informations de routage contenues dans des messages de protocoles de routage que s'échangent les routeurs des réseaux, et une base d'informations de transmission (ou FIB pour « Forwarding Information Base ») qui est alimentée par un outil (ou moteur) de routage du routeur en informations de routage stockées dans la base d'informations de routage.

Le document US2003/0023701 divulgue un routeur, qui contient des bases de données RIB et FIB.

Parmi les protocoles de routage couramment utilisés, on peut notamment citer BGP (« Border Gateway Protocol ») et OSPF (« Open Shortest Path First Protocol »).

La base d'informations de transmission (FIB) présentant un nombre maximum d'entrées qui est généralement plus petit que le nombre maximum d'entrées, relatives à la transmission, de la base d'informations de routage (RIB), il arrive parfois qu'elle soit saturée, ce qui peut dans certaines situations empêcher le routeur de fonctionner.

On entend ici par « entrée » un emplacement de stockage dédié à une information au sein d'une base de données agencée sous la forme d'une table de correspondance.

Pour tenter de remédier à cet inconvénient, il a été proposé d'équiper les routeurs d'un dispositif de gestion chargé de surveiller l'état de remplissage de la base d'informations de transmission (FIB) afin d'arrêter de l'alimenter en informations de routage provenant de la base d'informations de routage juste avant qu'elle ne soit saturée. Dans le cas de routeurs BGP, il a également été proposé de limiter le nombre de préfixes (ou adresses) reçu(e)s par chaque routeur.

Dans un cas comme dans l'autre, lorsque la base d'informations de transmission (FIB) est saturée et que l'on interrompt son alimentation, elle peut ne pas comporter les définitions de toutes les routes, dites primaires, qui permettent à son routeur d'assurer une connectivité complète vis-à-vis des adresses (ou préfixes) qu'il connaît, alors même qu'elle comporte des définitions de routes, dites secondaires, permettant d'assurer des services complémentaires, comme par exemple la répartition de trafic (ou « load balancing ») et la redondance (ou « redundancy »), qui ne concernent pas directement la connectivité.

Par conséquent, en cas de saturation de sa base d'informations de transmission (FIB), le routeur peut ne pas assurer une connectivité complète. En d'autres termes, les deux solutions proposées souffrent d'un manque de discrimination entre les différentes routes qui sont définies par les informations de routage stockées dans les bases d'informations de routage (RIB).

De plus, en cas de changement important dans la base d'information de routage (RIB), la mise à jour de la base d'informations de transmission (FIB) avec la totalité des entrées de la RIB, indistinctement primaires ou secondaires, peut prendre du temps, pendant lequel le routeur n'est pas disponible pour transmettre les paquets qu'il reçoit, lequel n'est pas compatible avec la continuité de service attendue d'un réseau IP.

Aucune solution connue n'apportant une entière satisfaction, l'invention a donc pour but d'améliorer la situation.

Elle propose à cet effet un dispositif de gestion d'informations de routage, pour un routeur d'un réseau de communication, comprenant une première base d'informations de routage (RIB) destinée à être alimentée en informations de routage contenues dans des messages de protocole(s) de routage, une seconde base d'informations de transmission (FIB) comportant un nombre maximum d'entrées, et des moyens de gestion chargés d'alimenter la seconde base en informations de routage provenant de la première base.

Ce dispositif de gestion se caractérise par le fait que ses moyens de gestion sont chargés de comparer à des instants choisis (par exemple périodiquement) le nombre d'entrées de la première base (RIB), relatives à la transmission, à un seuil choisi, inférieur ou égal au nombre maximum d'entrées de la seconde base, afin d'alimenter la seconde base en informations de routage choisies en fonction du résultat de la comparaison.

Le dispositif selon l'invention peut comporter d'autres caractéristiques qui peuvent être prises séparément ou en combinaison, et notamment :
- ses moyens de gestion peuvent être chargés, d'une part, lorsque le nombre d'entrées de la première base, relatives à la transmission, est supérieur ou égal au seuil choisi, d'alimenter la seconde base en informations de routage dites « primaires », représentatives exclusivement de routes primaires permettant au routeur d'assurer une connectivité complète vis-à-vis des adresses (ou préfixes) qu'il connaît, et d'autre part, lorsque le nombre d'entrées de la première base, relatives à la transmission, est inférieur au nombre maximum d'entrées, d'alimenter la seconde base avec les informations de routage primaires et des informations de routage dites « secondaires » ;
- les informations de routage secondaires sont par exemple représentatives de routes secondaires associées à des services complémentaires, comme par exemple la répartition de trafic et la redondance ;
- ses moyens de gestion peuvent être chargés d'analyser les informations de routage stockées dans la première base afin de sélectionner les informations de routage primaires et/ou secondaires ;
- la première base peut être subdivisée en au moins une partie primaire et une partie secondaire. Dans ce cas, le dispositif comprend des moyens de traitement chargés d'analyser les informations de routage qui sont contenues dans les messages de protocole(s) de routage afin de stocker les informations de routage primaires dans la partie primaire et les informations de routage secondaires dans la partie secondaire ;
- ses moyens de gestion peuvent être chargés, d'une part, lorsque le nombre d'entrées de la première base est supérieur ou égal au seuil choisi, d'alimenter la seconde base en informations de routage primaires stockées dans la partie primaire, et d'autre part, lorsque le nombre d'entrées de la première base est inférieur au seuil choisi, d'alimenter la seconde base avec les informations de routage primaires et secondaires qui sont stockées respectivement dans les parties primaire et secondaire ;
- le seuil choisi est par exemple compris dans un intervalle défini par une première valeur égale à 80% du nombre maximum d'entrées de la seconde base et une seconde valeur égale à 95% dudit nombre maximum d'entrées de la seconde base ;
- ses moyens de gestion peuvent être agencés de manière à générer un message d'alarme destiné au gestionnaire du réseau chaque fois que le nombre d'entrées de la première base, relatives à la transmission, est supérieur ou égal au seuil choisi ;
- en cas de changement important du contenu de la première base, ses moyens de gestion peuvent être agencés pour mettre à jour la seconde base de façon hiérarchisée, en commençant par les informations primaires,
- les informations de routage sont par exemple fournies par des messages de protocoles de routage tels que BGP et OSPF.

L'invention propose également un routeur équipé d'un dispositif de gestion du type de celui présenté ci-avant.

L'invention est particulièrement bien adaptée, bien que de façon non exclusive, aux réseaux de communication à protocole Internet (ou IP), et plus généralement à tout type de réseau de communication à transmission de paquets.

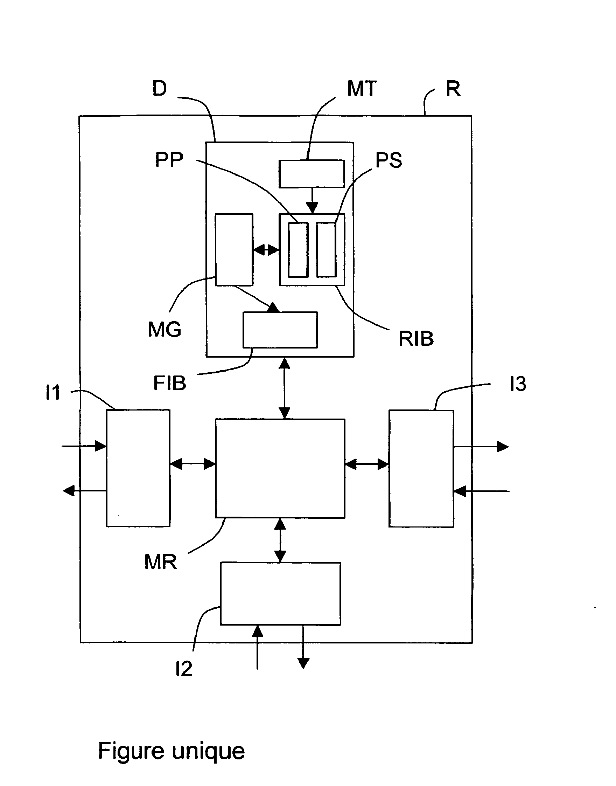

D'autres caractéristiques et avantages de l'invention apparaîtront à l'examen de la description détaillée ci-après, et du dessin annexé, sur lequel l'unique figure illustre de façon très schématique un routeur équipé d'un exemple de réalisation d'un dispositif de gestion selon l'invention. Le dessin annexé pourra non seulement servir à compléter l'invention, mais aussi contribuer à sa définition, le cas échéant.

L'invention a pour objet de permettre à un routeur d'un réseau de communication d'offrir une connectivité complète vis-à-vis des adresses (ou préfixes) qu'il connaît, notamment lorsque sa base d'informations de transmission (FIB) risque d'être saturée.

Dans ce qui suit, on considère à titre d'exemple non limitatif que le réseau de communication, auquel appartient le routeur selon l'invention, est un réseau à protocole Internet (ou IP). Mais, l'invention n'est pas limitée à ce type de réseau. Elle concerne en effet tout type de réseau dans lequel des paquets de données (ou datagrammes) provenant d'un équipement de communication source doivent faire l'objet d'un routage afin de parvenir au niveau d'un ou plusieurs équipements de communication destinataires.

Comme cela est illustré sur l'unique figure, un routeur R peut, d'une façon très schématique mais néanmoins suffisante à la compréhension de l'invention, être résumé à des interfaces d'entrée/sortie li raccordées à des voies (ou liens) de communication (matérialisé(e)s par les flèches) et à un module de routage MR.

Dans l'exemple non limitatif illustré, l'indice i est compris entre 1 et 3, mais il peut prendre n'importe quelle autre valeur.

Le module de routage MR comprend une matrice de commutation, raccordée aux interfaces li de son routeur R, qu'il doit configurer en fonction d'instructions fournies par le réseau, d'informations d'adresse contenues dans les paquets de données (ou datagrammes) à (re-)transmettre, et d'informations de routage contenues dans une base d'informations de transmission (FIB), de manière à permettre la transmission et l'acheminement desdits paquets de données vers une ou plusieurs destinations. Il comprend en outre généralement (ou est couplé à) des mémoires permettant l'insertion locale et/ou l'extraction locale de paquets de données, ainsi que le stockage temporaire de paquets de données reçus sur l'une des interfaces li.

Ce module de routage MR étant bien connu de l'homme de l'art et ne faisant pas l'objet de l'invention, il ne sera pas décrit ici plus en détail.

La gestion des informations de routage, utilisées par le module de routage MR, est assurée par un dispositif de gestion D qui est préférentiellement implanté dans le routeur R et couplé à son module de routage MR. Le dispositif D pourrait également être agencé sous la forme d'un boîtier raccordé au routeur R.

Le dispositif de gestion D, selon l'invention, comprend au moins trois éléments : une base d'informations de routage RIB (ou « Routing Information Base »), une base d'informations de transmission FIB (ou « Forwarding Information Base »), et un module de gestion MG.

La base d'informations de routage RIB est alimentée en informations de routage extraites de messages de protocole(s) de routage, comme par exemple BGP ou OSPF, que s'échangent classiquement les routeurs R des réseaux de communication. Cette base d'informations de routage RIB comporte généralement un très grand nombre d'entrées permettant chacune de stocker une information de routage relative à une adresse (ou un préfixe) connu(e). Parmi ces informations, certaines sont notamment relatives à la transmission.

La base d'informations de transmission FIB comporte essentiellement des informations de transmission, utiles au module de routage MR, et extraites de la base d'informations de routage RIB par le module de gestion MG qui assure à cet effet la fonction d'outil (ou moteur) de routage. Cette base d'informations de transmission FIB comporte un nombre maximum Nmax d'entrées stockant chacune une information de transmission relative à une adresse (ou un préfixe) connu(e).

Le module de gestion MG est plus précisément agencé de manière à comparer à des instants choisis le nombre d'entrées de la base d'informations de routage RIB, qui sont relatives à la transmission, à un seuil choisi S inférieur ou égal au nombre maximum Nmax d'entrées de la base d'informations de transmission FIB, afin d'alimenter cette dernière en informations de routage (dédiées à la transmission) choisies en fonction du résultat de la comparaison.

Les comparaisons peuvent être par exemple effectuées de façon périodique, par exemple toutes les minutes. Mais, on peut également envisager qu'elles se fassent de façon déclenchée, à réception d'instructions provenant de l'administrateur (ou du gestionnaire) du réseau, ou bien lorsqu'une condition particulière est réalisée dans le routeur, comme par exemple un changement fréquent de destinations de routes.

Préférentiellement, on définit deux types d'informations de routage.

Un premier type, dit primaire, comporte les informations de routage qui sont exclusivement représentatives de routes, dites primaires, qui permettent au routeur R d'assurer une connectivité maximum vis-à-vis des adresses (ou préfixes) qu'il connaît. Cette connectivité maximum est définie comme l'ensemble des informations de routage qui permettent d'atteindre l'ensemble des adresses pour lesquelles le routeur a reçu une information de routage, mais sans forcément tenir compte des spécificités de chaque adresse. Par exemple, si une route R1 est définie pour atteindre une adresse A1 et qu'une route R2 permet en même temps d'atteindre les adresses A1 et A2, alors la route R2 est dite primaire.

Un second type, dit secondaire, comporte toutes les autres informations de routage, que l'on pourrait qualifier de complémentaires. Il s'agit généralement d'informations représentatives de routes, dites secondaires, qui sont associées à des services complémentaires. Parmi ces services complémentaires, on peut par exemple citer la répartition de trafic (ou « load balancing »), qui permet de répartir le trafic (ou la charge) sur différentes portions de routes ayant une même destination, et la redondance (ou « redundancy »), qui permet de prendre le relais d'une première route primaire au moyen d'une deuxième route primaire identique lorsqu'un problème survient sur la première route primaire, et inversement. Dans l'exemple précédent, la route R1 est dite secondaire puisqu'elle est utilisée pour fournir de l'information supplémentaire sur la façon d'atteindre l'adresse A1, alors que cette adresse A1 est déjà atteignable par la route R2.

Ces informations secondaires sont utiles au routeur R, notamment pour assurer un service défini par un accord de niveau de service (ou SLA pour « Service Level Agreement »), passé entre un opérateur de réseau et l'un de ses clients. Elles permettent en effet d'enrichir les possibilités offertes à un routeur R pour joindre une destination définie par une adresse (ou un préfixe) qu'il connaît. Mais, elles ne sont pas nécessaires audit routeur R pour assurer une connectivité complète vis-à-vis desdites adresses (ou préfixes) qu'il connaît.

Le module de gestion MG est préférentiellement chargé d'alimenter la base d'informations de transmission FIB en informations de routage primaires (relatives à la transmission) chaque fois que le résultat d'une comparaison indique que le nombre d'entrées de la base d'informations de routage RIB, relatives à la transmission, est supérieur ou égal au seuil choisi S (inférieur ou égal au nombre maximum Nmax d'entrées de la base d'informations de transmission FIB), tandis qu'il est préférentiellement chargé d'alimenter la base d'informations de transmission FIB avec toutes les informations de routage primaires et secondaires (relatives à la transmission) chaque fois que le résultat d'une comparaison indique que le nombre d'entrées de la base d'informations de routage RIB, relatives à la transmission, est inférieur au seuil choisi S.

La valeur du seuil S peut prendre n'importe quelle valeur inférieure ou égale au nombre maximum Nmax d'entrées de la base d'informations de transmission FIB. Cependant, il est préférable qu'elle soit comprise dans un intervalle défini par une première valeur égale à 80% du nombre maximum Nmax d'entrées de la base d'informations de transmission FIB et une seconde valeur égale à 95% dudit nombre maximum d'entrées de la base d'informations de transmission FIB. Par exemple, on choisit un seuil S égal à 90% du nombre maximum Nmax d'entrées de la base d'informations de transmission FIB.

La discrimination par le module de gestion MG, entre les informations primaires et secondaires, peut se faire d'au moins deux façons.

Une première façon consiste à utiliser une base d'informations de routage RIB classique et à agencer le module de gestion MG de sorte qu'il soit capable d'analyser le type des informations de routage stockées dans la base d'informations de routage RIB, afin de sélectionner soit exclusivement les informations de routage primaires (relatives à la transmission), soit toutes les informations de routage primaires et secondaires (relatives à la transmission).

Une seconde façon consiste, comme illustré sur l'unique figure, à utiliser une base d'informations de routage RIB subdivisée en au moins une partie primaire PP, dans laquelle sont stockées les informations de routage primaires, et une partie secondaire PS, dans laquelle sont stockées les informations de routage secondaires.

Dans ce cas, le dispositif de gestion D comprend préférentiellement un module de traitement MT chargé d'analyser le type des informations de routage qui sont contenues dans les messages de protocole(s) de routage reçus, afin de discriminer celles qui sont de type primaire de celles qui sont de type secondaire. Ce module de traitement MT est également chargé de stocker les informations de routage primaires, qu'il a discriminées, dans la partie primaire PP de la base d'informations de routage RIB et les informations de routage secondaires, qu'il a discriminées, dans la partie secondaire PS de ladite base d'informations de routage RIB.

Le module de gestion MG n'a donc plus besoin d'analyser le type des informations de routage stockées dans la base d'informations de routage RIB. II lui suffit désormais soit d'extraire de la première partie PP de la base d'informations de routage RIB les informations primaires (relatives à la transmission) qu'elle stocke pour alimenter la base d'informations de transmission FIB, lorsque le nombre d'entrées (relatives à la transmission) de la base d'informations de routage RIB est supérieur ou égal au seuil choisi S, soit d'extraire des première PP et seconde PS parties de la base d'informations de routage RIB les informations primaires et secondaires (relatives à la transmission) qu'elles stockent respectivement pour alimenter la base d'informations de transmission FIB, lorsque le nombre d'entrées (relatives à la transmission) de la base d'informations de routage RIB est inférieur au seuil choisi S.

Le module de gestion MG peut par ailleurs être agencé de manière à générer un message d'alarme à destination du gestionnaire du réseau chaque fois que le nombre d'entrées de la base d'informations de routage RIB, relatives à la transmission, est supérieur ou égal au seuil choisi S, et donc chaque fois qu'il décide de n'alimenter la base d'informations de transmission FIB qu'avec des informations de routage primaires. Le gestionnaire du réseau étant ainsi averti de la situation au niveau de l'un de ses routeurs, il peut réagir en conséquence.

Le module de gestion MG peut également être agencé, en cas de changement important et brutal du contenu de la base d'informations de routage RIB, pour faire une mise à jour hiérarchisée de la base d'informations de transmission FIB, en l'alimentant d'abord avec les informations de routage primaires, de façon à réduire le délai de ladite mise à jour à ce qui est strictement nécessaire, puis en complétant la base d'informations de transmission FIB avec les informations de routage secondaires, par exemple en étalant ces mises à jours dans un intervalle de temps plus long.

Le dispositif de gestion D selon l'invention, et notamment son module de gestion MG et son éventuel module de traitement MT, peuvent être réalisés sous la forme de circuits électroniques, de modules logiciels (ou informatiques), ou d'une combinaison de circuits et de logiciels.

L'invention ne se limite pas aux modes de réalisation de dispositif de gestion et de routeur décrits ci-avant, seulement à titre d'exemple, mais elle englobe toutes les variantes que pourra envisager l'homme de l'art dans le cadre des revendications ci-après.

## Revendications

1. Dispositif de gestion d'informations de routage (D) pour un routeur (R) d'un réseau de communication, comprenant une première base d'informations de routage (RIB) propre à être alimentée en informations de routage contenues dans des messages de protocole(s) de routage, une seconde base d'informations de transmission (FIB) comportant un nombre maximum d'entrées, et des moyens de gestion (MG) agencés pour alimenter ladite seconde base (FIB) en informations de routage provenant de ladite première base (RIB), **caractérisé en ce que** lesdits moyens de gestion (MG) sont agencés pour comparer à des instants choisis le nombre d'entrées de ladite première base (RIB), relatives à la transmission, à un seuil choisi, inférieur ou égal audit nombre maximum d'entrées de ladite seconde base (FIB), de manière à alimenter ladite seconde base (FIB) en informations de routage choisies en fonction du résultat de ladite comparaison.

2. Dispositif selon la revendication 1, **caractérisé en ce que** lesdits moyens de gestion (MG) sont agencés, d'une part, lorsque ledit nombre d'entrées de ladite première base (RIB), relatives à la transmission, est supérieur ou égal audit seuil choisi, pour alimenter ladite seconde base (FIB) en informations de routage dites « primaires », représentatives exclusivement de routes primaires permettant audit routeur (R) d'assurer une connectivité complète vis-à-vis des adresses qu'il connaît, et d'autre part, lorsque ledit nombre d'entrées de ladite première base (RIB), relatives à la transmission, est inférieur audit seuil choisi, pour alimenter ladite seconde base (FIB) avec lesdites informations de routage primaires et des informations de routage dites « secondaires ».

3. Dispositif selon la revendication 2, **caractérisé en ce que** lesdites informations de routage secondaires sont représentatives de routes secondaires associées à des services complémentaires.

4. Dispositif selon la revendication 3, **caractérisé en ce que** lesdits services complémentaires sont choisis dans un groupe comprenant au moins la répartition de trafic et la redondance.

5. Dispositif selon l'une des revendications 2 à 4, **caractérisé en ce que** lesdits moyens de gestion (MG) sont agencés pour analyser lesdites informations de routage stockées dans ladite première base (RIB) de manière à sélectionner les informations de routage primaires et/ou secondaires.

6. Dispositif selon l'une des revendications 2 à 4, **caractérisé en ce que** ladite première base (RIB) est subdivisée en au moins une partie primaire (PP) et une partie secondaire (PS), et **en ce qu'**il comprend des moyens de traitement (MT) agencés pour analyser lesdites informations de routage contenues dans lesdits messages de protocole(s) de routage de manière à stocker les informations de routage primaires dans ladite partie primaire (PP) et lesdites informations de routage secondaires dans ladite partie secondaire (PS).

7. Dispositif selon la combinaison des revendications 2 et 6, **caractérisé en ce que** lesdits moyens de gestion (MG) sont agencés, d'une part, lorsque ledit nombre d'entrées de ladite première base (RIB) est supérieur ou égal audit seuil, pour alimenter ladite seconde base (FIB) en informations de routage primaires stockées dans ladite partie primaire (PP), et d'autre part, lorsque ledit nombre d'entrées de ladite première base (RIB) est inférieur audit seuil, pour alimenter ladite seconde base (FIB) avec lesdites informations de routage primaires et secondaires stockées respectivement dans lesdites parties primaire (PP) et secondaire (PS).

8. Dispositif selon l'une des revendications 1 à 7, **caractérisé en ce que** ledit seuil est compris dans un intervalle défini par une première valeur égale à 80% dudit nombre maximum d'entrées et une seconde valeur égale à 95% dudit nombre maximum d'entrées.

9. Dispositif selon l'une des revendications 2 à 8, **caractérisé en ce que** lesdits moyens de gestion (MG) sont agencés pour générer un message d'alarme destiné à un gestionnaire du réseau chaque fois que ledit nombre d'entrées de ladite première base (RIB), relatives à la transmission, est supérieur ou égal audit seuil choisi.

10. Dispositif selon l'une des revendications 2 à 9, **caractérisé en ce que** lesdits moyens de gestion (MG) sont agencés pour mettre à jour ladite seconde base (FIB) de façon hiérarchisée, en commençant par les informations primaires, en cas de changement important du contenu de ladite première base (RIB).

11. Dispositif selon l'une des revendications 1 à 10, **caractérisé en ce qu**e lesdites informations de routage sont fournies par des messages de protocoles de routage choisis dans un groupe comprenant au moins BGP et OSPF.

12. Routeur (R) pour un réseau de communication, **caractérisé en ce qu**'il comprend un dispositif de gestion (D) selon l'une des revendications précédentes.

## Claims

1. Routing information management device (D) for a router (R) of a communication network, said device comprising a routing information base (RIB) adapted to be fed with routing information contained in routing protocol messages, a forwarding information base (FIB) having a maximum number of entries, and management means (MG) adapted to feed said forwarding information base (FIB) with routing information coming from said routing information base (RIB), which device is **characterised in that** said management means (MG) compare at selected times the number of entries in said routing information base (RIB) relating to sending to a selected threshold less than or equal to said maximum number of entries in said forwarding information base (FIB) so as to feed said forwarding information base with routing information selected as a function of the result of said comparison.

2. Device according to claim 1, **characterised in that**, if said number of entries in said routing information base (RIB) relating to sending is greater than or equal to said selected threshold said management means (MG) feed said forwarding information base (FIB) with "primary" routing information representing only primary routes enabling said router (R) to ensure complete connectivity vis-à-vis addresses that it knows and if said number of entries in said routing information base (RIB) relating to sending is less than said selected threshold said management means (MG) feed said forwarding information base (FIB) with said primary routing information and "secondary" routing information.

3. Device according to claim 2, **characterised in that** said secondary routing information represents secondary routes associated with additional services.

4. Device according to claim 3, **characterised in that** said additional services are selected from a group including traffic distribution and redundancy.

5. Device according to any of claims 2 to 4, **characterised in that** said management means (MG) analyse said routing information stored in said routing information base (RIB) to select the primary and/or secondary routing information.

6. Device according to any of claims 2 to 4, **characterised in that** said routing information base (RIB) is divided into at least a primary portion (PP) and a secondary portion (PS) and **in that** said device comprises processing means (MT) that analyse said routing information contained in said routing protocol messages in order to store said primary routing information in said primary portion (PP) and said secondary routing information in said secondary portion (PS).

7. Device according to claim 2 in combination with claim 6, **characterised in that**, if said number of entries of said routing information base (RIB) is greater than or equal to said threshold said management means (MG) feed said forwarding information base (FIB) with primary routing information stored in said primary portion (PP) and if said number of entries in said routing information base (RIB) is less than said threshold said management means (MG) feed said forwarding information base (FIB) with said primary and secondary routing information respectively stored in said primary portion (PP) and said secondary portion (PS).

8. Device according to any of claims 1 to 7, **characterised in that** said threshold is in a range defined by a first value equal to 80% of said maximum number of entries and a second value equal to 95% of said maximum number of entries.

9. Device according to any of claims 2 to 8, **characterised in that** said management means (MG) generate an alarm message intended for a manager of the network each time that said number of entries of said routing information base (RIB) relating to sending is greater than or equal to said selected threshold.

10. Device according to any of claims 2 to 9, **characterised in that** said management means (MG) update said forwarding information base (FIB) hierarchically, beginning with the primary information, in the event of a large change to the content of said routing information base (RIB).

11. Device according to any of claims 1 to 10, **characterised in that** said routing information is supplied by routing protocol messages selected from a group including BGP and OSPF protocol messages.

12. Router for a communication network, **characterised in that** it comprises a management device (D) as claimed in any preceding claim.

## Patentansprüche

1. Vorrichtung zur Verwaltung von Routing-Informationen (D) für einen Router (R) eines Kommunikationsnetzes, beinhaltend eine erste Bank Routing-Informationen (RIB), die mit Routing-Informationen versorgt werden kann, welche in Routingprotokollmeldungen enthalten sind, eine zweite Bank Übertragungsinformationen (FIB), die eine Höchstzahl Eingaben enthält, und Mittel zur Verwaltung (MG), die so aufgebaut sind, dass sie diese zweite Bank (FIB) mit von dieser ersten Bank (RIB) herkommenden Routing-Informationen versorgen, **dadurch gekennzeichnet, dass** diese Verwaltungsmittel (MG) so aufgebaut sind, dass sie zu gewählten Zeitpunkten die Anzahl Eingaben dieser ersten Bank (RIB) bezüglich der Übertragung mit einer gewählten Schwelle kleiner oder gleich dieser Höchstzahl Eingaben der zweiten Bank (FIB) vergleichen, um diese zweite Bank (FIB) mit Routing-Informationen zu versorgen, die je nach Ergebnis dieses Vergleichs gewählt werden.

2. Vorrichtung gemäß Anspruch 1, **dadurch gekennzeichnet, dass** diese Mittel zur Verwaltung (MG) so aufgebaut sind, dass wenn diese Anzahl Eingaben der ersten Bank (RIB) bezüglich der Übertragung größer oder gleich dieser gewählten Schwelle ist, diese zweite Bank (FIB) mit so genannten "primären" Routing-Informationen versorgt wird, die ausschließlich für primäre Übertragungswege stehen, die es diesem Router (R) gestatten, eine vollständige Konnektivität zu ihm bekannten Adressen zu gewährleisten, und dass zum anderen wenn diese Anzahl Eingaben dieser ersten Bank (RIB) bezüglich der Übertragung kleiner ist als diese gewählte Schwelle, diese zweite Bank (FIB) mit diesen primären Routing-Informationen und so genannten "sekundären" Routing-Informationen versorgt wird.

3. Vorrichtung gemäß Anspruch 2, **dadurch gekennzeichnet, dass** diese sekundären Routing-Informationen für sekundäre Übertragungswege stehen, die zu ergänzenden Diensten zugehörig sind.

4. Vorrichtung gemäß Anspruch 3, **dadurch gekennzeichnet, dass** diese ergänzenden Dienste aus einer Gruppe gewählt werden, in der mindestens die Verkehrsverteilung und die Redundanz enthalten sind.

5. Vorrichtung gemäß einem der Ansprüche 2 bis 4, **dadurch gekennzeichnet, dass** diese Mittel zur Verwaltung (MG) so aufgebaut sind, dass sie diese in der ersten Bank (RIB) gespeicherten Routing-Informationen analysieren, um die primären und/oder sekundären Routing-Informationen auszuwählen.

6. Vorrichtung gemäß einem der Ansprüche 2 bis 4, **dadurch gekennzeichnet, dass** diese erste Bank (RIB) in mindestens einen primären Teil (PP) und einen sekundären Teil (PS) unterteilt ist, und **dadurch gekennzeichnet, dass** sie Mittel zur Bearbeitung (MT) enthält, die so aufgebaut sind, dass sie diese in diesen Routingprotokollmeldungen enthaltenen Routing-Informationen analysieren, um die primären Routing-Informationen in diesem primären Teil (PP) zu speichern und diese sekundären Routing-Informationen in diesem sekundären Teil (PS).

7. Vorrichtung gemäß der Kombination aus Anspruch 2 und Anspruch 6, **dadurch gekennzeichnet, dass** diese Mittel zur Verwaltung (MG) so aufgebaut sind, dass sie zum einen wenn diese Anzahl Eingaben dieser ersten Bank (RIB) größer oder gleich der gewählten Schwelle ist, diese zweite Bank (FIB) mit primären Routing-Informationen versorgen, die in diesem primären Teil (PP) gespeichert sind, und zum anderen, wenn diese Anzahl Eingaben der ersten Bank (RIB) kleiner ist als die gewählte Schwelle, diese zweite Bank (FIB) mit diesen primären und sekundären Routing-Informationen versorgen, die in diesem primären (PP) beziehungsweise diesem sekundären Teil (PS) gespeichert sind.

8. Vorrichtung gemäß einem der Ansprüche 1 bis 7, **dadurch gekennzeichnet, dass** diese gewählte Schwelle in einem Intervall liegt, das definiert wird durch einen ersten Wert gleich 80 % dieser Höchstzahl Eingaben und einen zweiten Wert gleich 95 % dieser Höchstzahl Eingaben.

9. Vorrichtung gemäß einem der Ansprüche 2 bis 8, **dadurch gekennzeichnet, dass** diese Mittel zur Verwaltung (MG) so aufgebaut sind, dass sie jedes Mal, wenn diese Anzahl Eingaben dieser ersten Bank (RIB) bezüglich der Übertragung größer oder gleich dieser gewählten Schwelle ist, eine Alarmmeldung generieren, die für einen Netzmanager bestimmt ist.

10. Vorrichtung gemäß einem der Ansprüche 2 bis 9, **dadurch gekennzeichnet, dass** diese Mittel zur Verwaltung (MG) so aufgebaut sind, dass sie bei einer wichtigen Änderung des Inhalts dieser ersten Bank (RIB) diese zweite Bank (FIB) hierarchisch aktualisieren, wobei mit den primären Informationen begonnen wird.

11. Vorrichtung gemäß einem der Ansprüche 1 bis 10, **dadurch gekennzeichnet, dass** diese Routing-Informationen von Routingprotokollmeldungen bereit gestellt werden, die aus einer Gruppe gewählt werden, die mindestens BGP und OSPF enthält.

12. Router (R) für Kommunikationsnetz, **dadurch gekennzeichnet, dass** er eine Vorrichtung zur Verwaltung (D) gemäß einem der vorstehenden Ansprüche enthält.
